# EUROPEAN PATENT APPLICATION

(11) **EP 3 818 960 A1**
(43) Date of publication of application: **12.05.2021**
(21) Application number: 20206095.0
(22) Date of filing: 06.11.2020
(51) Int. Cl.: A61C 8/00, A61C 13/225

(54) **DENTAL PROSTHETIC SYSTEM WITH A BRIDGE STRUCTURE REMOVABLE FROM A BASE STRUCTURE**

(30) Priority: 06.11.2019 BE 201905768
(71) Applicant: Dental Vision B.V.B.A., 3080 Tervuren (BE)
(72) Inventor: DE CLERCK, René, 3080 Tervuren (BE)
(74) Representative: Callewaert, Koen

(57) **Abstract**

Dental prosthetic system with a base structure (1) and a bridge structure (2). The base structure can be mounted on implants (10) provided in the jaw, whereas the bridge structure (2) with prosthetic teeth (6) which can be fixed on the base structure (1) in a fitting and detachable manner. This bridge structure (2) has bores (8) for screws (12) to fix the bridge structure (2).
This system includes base screws (11) for attaching the base structure (1) to said implants (10), wherein the head (15) of these base screws (11) is provided with an screw hole for mounting the bridge structure (2) on the base structure (1) by means of bridge screws (12) provided to that end which can be fixed in the screw hole of the base screws (11).

## Description

The invention concerns a dental prosthetic system to be mounted on one or more implants attached in the bone of a jaw. The invention concerns in particular a dental prosthetic system to be attached to two or more implants. This prosthetic system comprises a prosthetic base structure which can be mounted on a free end of said implants. This base structure includes one or more bores which allow the base structure to be attached to the implants with screws. Furthermore, this system contains a dental bridge structure with one or more prosthetic teeth. This bridge structure can be attached to the base structure in a fitting and detachable manner, the bridge structure having bores for guiding screws to secure it to the base structure.

With such dental prosthetics, a fixed and stable base structure is present in the oral cavity, with the bridge structure containing prosthetic teeth being detachably attached to this base structure. The base structure is itself attached to implants fixed in the bone of the jaw. This offers as a main advantage that the bridge structure can be removed from the base structure, as already described, for example, in document US 2014/0178839. Removing the bridge structure from the base structure may be necessary, for example, to replace a damaged bridge structure with a new or repaired bridge structure.

The existing systems wherein a bridge structure can be removed from a base structure are disadvantageous in that a certain clearance may arise between the bridge structure and the base structure, which causes bacteria and impurities to penetrate between both structures and possibly infiltrate between the bone and the implants via this route. Thus, this may cause the bridge structure to become mobile in relation to the base structure on the one hand, and bacteria that end up between the gum or jawbone and the implants may cause inflammation and cause these implants to come loose from the bone on the other hand. It is also possible that, after some time, the bridge structure may become difficult or impossible to remove from the base structure.

The invention aims to remedy these disadvantages by proposing a dental prosthetic system that ensures a very good connection between the bridge structure and the base structure without any play between the two, while still allowing the bridge structure to be easily removed from the base structure.

To this end, said bores of the base structure cooperate with a corresponding bore of the bridge structure in the dental prosthetic system according to the invention, wherein the bores of the base structure are coaxial with corresponding bores of the bridge structure when the bridge structure is fitted on the base structure.

This system includes base screws for attaching the base structure, via said bores of the base structure, to said implants or to an abutment provided on these implants. The heads of these base screws are further provided with internally threaded screw holes for mounting the bridge structure to the base structure via the aforementioned bores of the base structure using the bridge screws provided to this end. The latter can be fixed in the aforementioned screw holes of the base screws for this purpose.

The bores of the bridge structure have internal threads that can cooperate with a release screw in such a way that, when the release screw is screwed into the bores of the bridge structure, it is removed from the base structure due to a compressive force exerted by the release screw on a corresponding base screw or on the base structure.

Practically, one end of said release screw, opposite to its head, extends opposite to the head of said base screw when the release screw is screwed into said bore of the bridge structure while this bridge structure is placed on the base structure.

According to a preferred embodiment of the system according to the invention, the bore of the bridge structure is provided with a sleeve extending over the length of the bore, this sleeve being provided with said internal thread for the release screw.

Advantageously, one end of said sleeve has a collar while the opposite end has an external thread and interacts with a nut in such a way that the bridge structure is clamped between the collar and the nut.

In this case, the bridge structure is preferably made mainly of plastic, whereas said sleeve is made of metal.

According to an interesting embodiment of the system according to the invention, the aforementioned bores of the bridge structure have a diameter which is greater than the diameter of the shaft of the aforementioned bridge screws, wherein said release screw can be screwed into these bores.

Other particularities and advantages of the dental prosthetic system according to the invention will become apparent from the following description of some particular embodiments of the invention; this description is given as an example only and does not limit the scope of the claimed protection in any way; the reference figures used below relate to the accompanying figures.
Figure 1 is a schematic view in perspective of an example of a basic structure and a bridge structure of a dental prosthetic system according to the invention.
Figure 2 is a schematic view in perspective of a base structure according to the invention.
Figure 3 is a schematic top view of the base structure from figures 1 and 2.
Figure 4 is a schematic bottom view of the base structure from figure 3.
Figure 5 is a schematic top view of the bridge structure from figure 1.
Figure 6 is a schematic bottom view of the bridge structure from figures 1 and 5.
Figure 7 is a schematic cross-section, according to plane II-II from figure 2, of an implant placed in the jaw on which a base structure with a bridge structure, according to an interesting embodiment of the invention, is mounted.
Figure 8 is the same view as in figure 7, with a release screw for removing the bridge structure from the base structure.
Figure 9 is a representation identical to the one in figure 8 when the bridge structure is removed from the base structure while a release screw is being screwed in.
Figure 10 is a cross section of a bore of the bridge structure from figures 7 to 9 together with a sleeve and a nut to be mounted in this bore.
Figure 11 is a schematic cross-section, according to plane II-II in figure 2, of an implant placed in the jaw on which a base structure with a bridge structure, according to an alternative embodiment of the invention, is mounted.
Figure 12 is the same view as that in figure 11, with a release screw for removing the bridge structure from the base structure.
Figure 13 is the same view as in figure 8 when the bridge structure is removed from the base structure while a release screw is being screwed in.
Figure 14 is a cross section of a bore of the bridge structure from figures 11 to 13.

In the various figures, the same reference figures refer to the same elements.

The invention generally relates to dental prostheses, in particular fixed dental prostheses attached to implants in the jaw in the oral cavity. In particular, a dental prosthesis system including a base structure and a bridge structure. The base structure is to be attached to implants placed in the jaw, while the bridge structure is to be attached to the base structure.

In order to make a fixed prosthesis mounted on implants screwed in the jaw for a patient who, for example, has a toothless lower or upper jaw, a preliminary planning and design phase is required. A digital model is thus generated of the relevant jaw. This can be done, for example, by making a three-dimensional X-ray of the jaw by performing a so-called CT scan. If necessary, these data can be supplemented with data from the gums on the jaw based on an optical scan of the jaw concerned, made using a laser scanner.

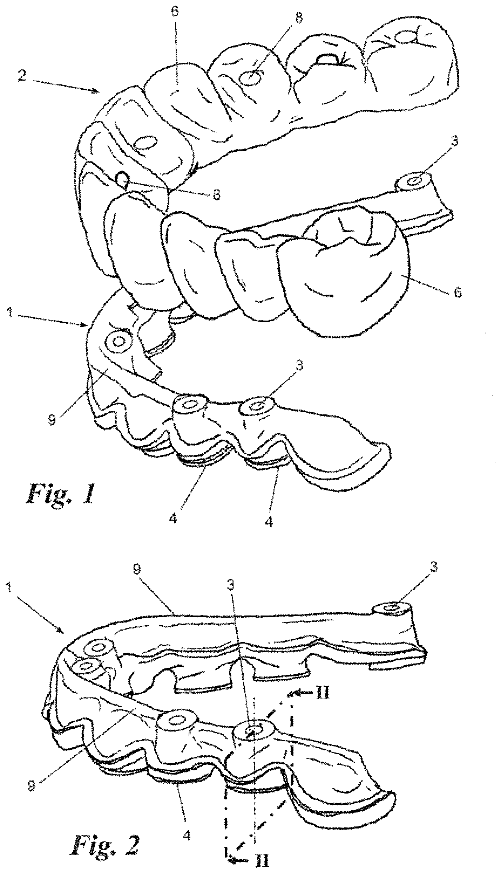

In this way, a digital three-dimensional model of the jaw is composed. Using this model, a planned position and orientation are then selected for implants to be placed in the jaw. In addition, a dental prosthesis is also digitally designed, which is to be attached to the implants and which contains prosthetic teeth. This dental prosthesis, according to the invention, is composed of a base structure 1 and a bridge structure 2. A schematic view in perspective of such a base structure 1 and a bridge structure 2 to be attached to the latter for a mandible is shown, by way of example, in figure 1.

After the base structure 1 and the bridge structure 2 have thus been digitally designed, they are manufactured in a manner well known as such from the digital design by milling, for example, or by applying an additive manufacturing technique such as stereo lithography, selective laser melting, etc.

In order to place the implants in a position and according to an orientation in the jaw that corresponds to the planned position and orientation of the implants, a drilling template is produced that allows to drill holes in the jaw at the preplanned positions for placing the implants. Such a drill template for precisely placing implants in the jaw is already described, for example, in document WO 2008/009080. The thus placed implants extend with a free end above the bone of the jaw.

When the implants are thus secured in the jaw with the required accuracy as planned, the base structure 1 can be attached to the latter.

By generating a digital model of the jaw and planning the placement of implants based on the latter, and by digitally designing the dental prosthesis, as well as a corresponding drilling template for placing the implants, and then producing them very accurately, it is possible to place implants in the jaw with high precision, as planned. This high precision in the placement of implants in the jaw and in the manufacture of the base structure and the bridge structure of the dental prosthesis ensures that the latter can be precisely fitted to the implants in the jaw as was previously digitally planned.

This precise placement of implants according to a planned position and orientation and a corresponding manufacture of the base structure and bridge structure with very small tolerances ensures, in particular, that the base structure can be fitted almost perfectly to two or more independent implants and that the bridge structure can then be placed fitting almost perfectly on the base structure.

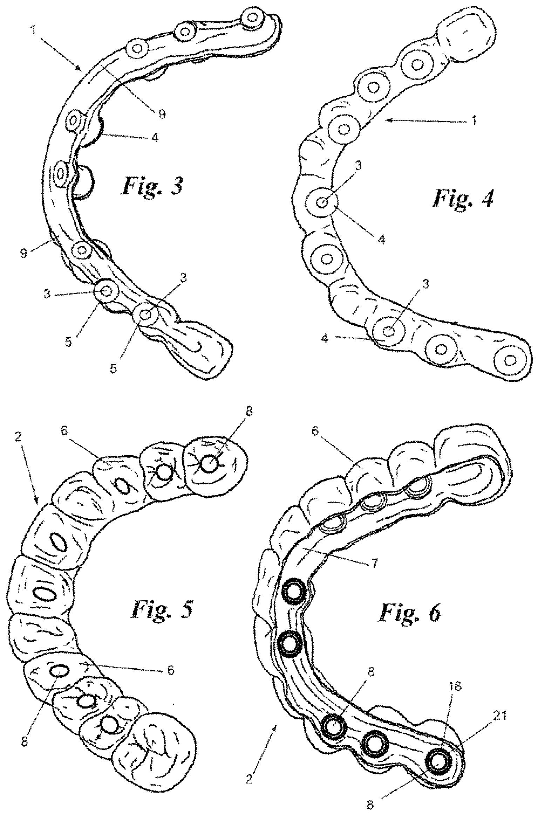

An example of a base structure 1 according to the invention is shown in figures 2 to 4. This base structure 1 has an arc shape and has cylindrical bores 3, through which screws can extend to attach the base structure 1 to the implants, provided at the positions where it should connect to the implants provided in the jaw. More specifically, annular supports 4 extend around these bores 3 on the bone side of the base structure 1, which should connect to the free end of the afore-mentioned implants. The bone side of the base structure 1 is the side facing the bone to which it is attached. The bone side of the base structure 1 is therefore shown in the bottom view of figure 4.

The side of the base structure 1 opposite to the bone side has recesses 5 in its surface for the head 15 of the screws 11 used to attach the base structure 1 to the implants. Thus, these recesses 5 allow the heads of these screws to be countersunk in the surface of the base structure 1 when the latter is mounted on the implants. However, it is not necessary for the heads 15 of the screws 11 to be countersunk in the surface of the base structure 1.

For the purposes of this description, the term implant or implants also includes an implant or implants to which an abutment is attached. The free end of the implants may then be formed by the end of an abutment opposite to the implant to which it is attached.

A bridge structure 2 is represented in figures 1, 5 and 6. This bridge structure 2 is arched and provided with prosthetic teeth 6. Thus, this bridge structure 2 forms a dental arch to be placed in the oral cavity on the base structure 1. For this purpose, the underside of this tooth arch, more specifically the side of the bridge structure 2 to be connected to the base structure 1, is provided with an arched gutter 7 whose surface can practically fit to the corresponding side of the base structure 1.

Furthermore, the bridge structure has 2 bores 8 for guiding screws to attach the bridge structure 2 to the base structure 1. To this end, the position and orientation of these bores 8 are selected such that the bores 8 in the bridge structure 2 are coaxial with the bores 3 in the base structure 1 when both structures 1 and 2 are placed fittingly on top of one another.

The screws that allow the base structure 1 to be attached to the implants through bores 3 are referred to as base screws 11 in this description, while the screws that allow the bridge structure 2 to be mounted through the bores 8 against the base structure 1 are referred to as bridge screws 12.

In the design of the base structure 1 and the bridge structure 2, it is ensured that the surface of the bridge structure 1, opposite to its bone side, can practically fit to the underside of the bridge structure 2. Recesses may be provided in which the heads 15 of said base screws fit. Thus, said gutter 7 of the bridge structure fits very closely to the surface of the base structure 1 when both are mounted on top of each other. It is particularly important here that the upright sides of the base structure 1 can match the upright walls of said gutter 7 of the bridge structure 2 in order to obtain a very tight seal between the base structure 1 and the bridge structure 2 in order to prevent seepage or migration of, for example, bacteria between these structures 1 and 2.

Preferably, the upright sides of the base structure 1 are tapered towards the crest 9. When the bridge structure 2 is then attached to the base structure 1 by means of said bridge screws, the compressive force between these upright sides and the walls of said gutter 7 increases when the bridge screws are tightened, so that a virtually hermetic seal can be obtained between the bridge structure 2 and the base structure 1.

In general, for example, for said upright sides of the base structure and for the corresponding walls of said gutter 7, a so-called conicity of 6° or of about 6° is selected in order to obtain a good seal between the base structure 1 and the bridge structure 2. This means that the inclination of these upright sides or of said walls, in a plane perpendicular to a central axis of the base structure and the bridge structure, forms an angle with an axis of symmetry in this plane of 6° or about 6°. Such a plane is represented, for example, as plane II-II in figure 2. The central axis of the base structure and of the bridge structure is understood to be a continuous line which follows the arc shape of these structures and runs approximately through the centre of the latter.

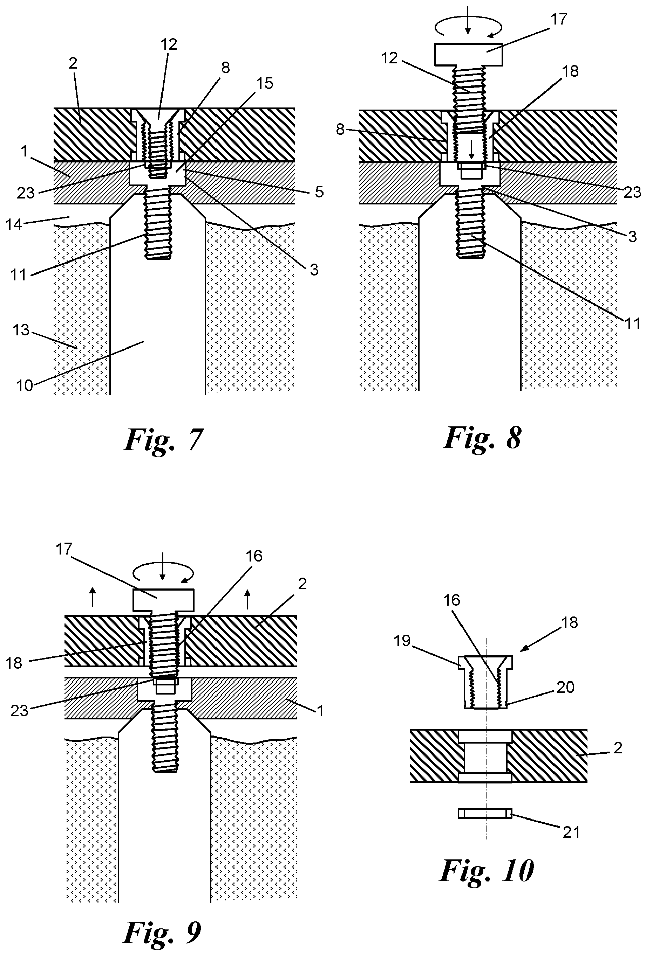

Figure 7 shows a schematic cross-section according to plane II-II in figure 2 comprising the central axis of the bore 3 when the base structure 1 is attached to an implant 10 with a base screw 11, while the bridge structure 2 is mounted on the base structure 1 by means of a bridge screw 12 according to an interesting embodiment of the invention. The implant 10 is herein fixed in the bone 13 of a jaw. Gum 14 extends in the space between the bone 13 and the base structure 1.

In this system, according to the invention, the base structure 1 is thus attached to the free end of the implant 10 by means of a base screw 11 through the aforementioned bore 3. The head 15 of the base screw 11 has an internally threaded screw hole. This screw hole in the head of the base screw 11 is coaxial to the axis of the screw and thus opens into the top surface of the screw head 15.

In addition, this screw head 15 also includes drive means for driving the screw 11 around its axis. These drive means are formed, for example, by a recess 23 which extends above the aforementioned screw hole in the head 15. The diameter of this recess 23 is slightly larger than the diameter of this screw hole here. For example, the recess 23 has a hexagonal cross-section in a direction perpendicular to the screw axis, such that the screw 11 can be driven using a so-called Allen key. It goes without saying that the recess 23 can also take other forms, such as a star-shaped recess that is suitable for working with a torx key.

The bridge structure 2 is placed on the base structure 1 and fastened by means of a bridge screw 12 which extends through a corresponding bore 8 of the bridge structure 2. The bridge screw 12 is screwed into the screw hole provided to that end in the head 15 of the base screw 11.

In this way, it is ensured that the bridge structure 2 can be fixed firmly and without any play to the base structure 1 with screws 11 and 12 in a spatially very compact manner.

Thanks to the digital design of the base structure 1 and the bridge structure 2 and their precise manufacture, said bores 3 and 8 extend almost perfectly coaxially so that the bridge screws 12 can be screwed in a fitting manner with their threaded ends into the heads 15 of the corresponding base screws 11 so as to fix the bridge structure 2 to the base structure 1.

Because the bridge screws 12 are screwed into the corresponding heads 15 of base screws 11, the bridge structure 2 can be removed from base structure 1 while the latter remains fixed with the implants 10. In addition, this design also ensures that it is not required to thread the base structure 1 for the bridge screws 12, which simplifies the manufacture of the base structure 1. In addition, it is possible to manufacture standardised bridge screws 12 and/or base screws 11 in an inexpensive way. During the digital planning of the design for the dental prosthesis, in particular the base structure 1 and the bridge structure 2, the dimensions of standardised bridge screws 12 and/or base screws 11 are then taken into account, such that they can be used.

In order to remove the bridge structure 2 from the base structure 1, the bridge screws 12 are loosened in a first step. Subsequently, moving the bridge structure 2 in relation to the base structure 1 without damaging these structures often proves to be very difficult or almost impossible due to the almost perfectly fitting connection of the structures 1 and 2 to each other.

As shown in figures 7 to 10, this is solved by providing internal thread 16 in the bore 8 of the bridge structure 2. This thread 16 can work in conjunction with a release screw 17.

Thus, in order to detach and remove the bridge structure 2 from the base structure 1, the release screw 17 is screwed into the bore 8 of the bridge structure 2. When this release screw 17 reaches the end of the bore 8, it makes contact with the head 15 of the underlying base structure 11. As shown in figure 9, as a result of the rotational movement of the release screw 17, a compressive force is exerted on the head 15 of the base screw 11 so that, as the release screw 17 is screwed further through the bore 8, the bridge structure 2 is removed from the base structure 1. In this way, via one or more bores 8 in the bridge structure 2, a compressive force is exerted on the underlying heads 15 of the base screws 11 in order to detach and remove the bridge structure 2 from the base structure 1.

Preferably, the diameter of the shaft of the release screw 17 is greater than the diameter of the screw hole or of the exit ring 23 in the head 15. However, this diameter of the shaft of the release screw 17 may also be smaller.

According to an interesting embodiment of the invention, the bores 8 of the bridge structure 2 are provided with a sleeve 18. This sleeve 18 is more specifically cylindrical and preferably stretches over the entire length of the bores 8 in the bridge structure 2. The inside of this sleeve 18 thus shows the internal thread 16 for the release screw 17.

The presence of such a sleeve 18 is particularly interesting when the bridge structure 2, for example, is made of plastic. Providing such a sleeve 18, which is usually made of metal, allows a relatively large force to be exerted with the release screw 17 between the base structure 1 and the bridge structure 2 without damaging the latter. Thus, for example, both the sleeve 18 and the release screw 17 can be made of titanium or stainless steel, for example.

The sleeve 18 can be attached to the bridge structure 2 in various ways, such as, for example, by gluing, clamping, screwing, etc. According to an interesting embodiment of the invention, as shown in figures 7 to 10, one end of the sleeve 18 has a collar 19, while its opposite end has an external thread 20 and works in conjunction with a nut 21. The bridge structure 2 is thus clamped between the collar 19 and this nut 21.

Furthermore, in the embodiment of the prosthetic system according to the invention, shown in figures 7 to 9, the internal diameter of the bore 8 in the bridge structure 2 is slightly larger than the external diameter of the shaft of the bridge screws 12. Thus, the shaft of the bridge screws 12 can move freely through the bores 8, without interacting with the internal thread 16 in these bores 8. When the bridge structure 2 is mounted against the base structure 1 and the bridge screws 12 are thus fixed in the screw holes in the head 15 of the base screws 11, the head of the bridge screws 12 rests on the opposite end of the bore 8 or on the end of said sleeve 18 at the level of the collar 19, so that the bridge structure is held between the head of the bridge screws 12 and the base screws 11.

Thus, in the embodiment shown in figures 7 to 10, the diameter of the shaft of the bridge-screws 12 is smaller than the diameter of the corresponding bores 8 in the bridge structure 2.

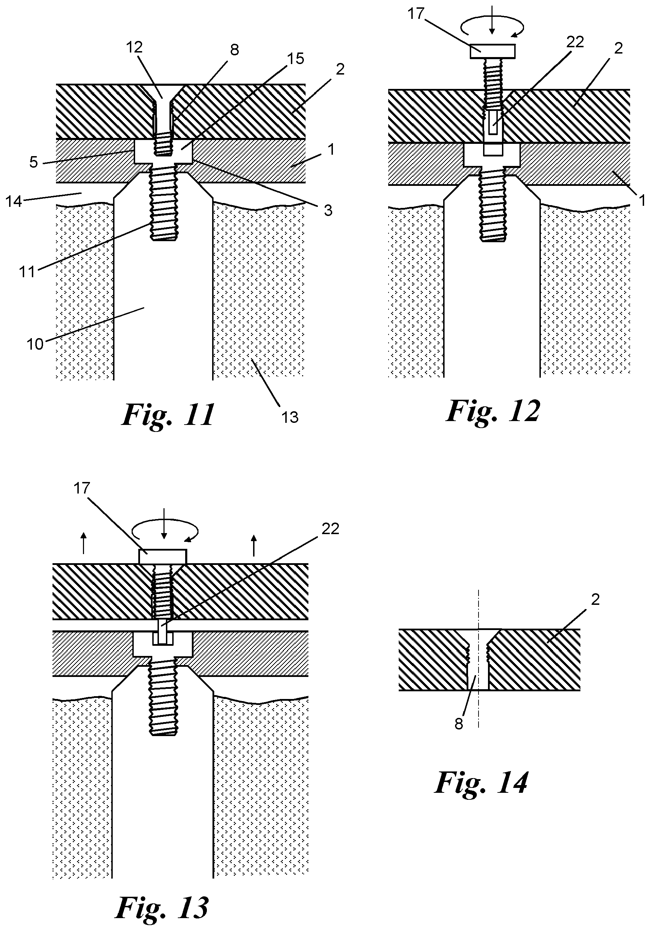

Figures 11 to 14 show a variant embodiment of the fastening of the bridge structure 2 to the base structure 1. The diameter of the shaft of the bridge screws 12 corresponds here to the diameter of the shaft of the release screw 17 and to the internal diameter of the bores 8 in the bridge structure 2.

However, the release screw 17 has at its end, opposite its head, a coaxial rod 22 with a diameter smaller than the diameter of the shaft of the bridge-screw 12 at the level of the corresponding end. When the release screw 17 is thus screwed into the bore 8 to remove the bridge structure 2 from the base structure 1, the end with the rod 22 will fit into the screw hole in the head 15 of the base screw 11. Consequently, a pressure can be exerted on the base screw 11 by the release screw 17 when it is screwed into the bore 8 so to remove the bridge structure 2 from the base structure 1.

The above-described invention thus makes it possible to remove a bridge structure from a base structure in a simple and efficient manner in a prosthetic system. This offers as a major advantage that, when gums have adhered to the prosthesis, it is not necessary to destroy the adhesion of these gums in order to replace or repair a prosthesis, for example. A major advantage of the invention is that the bridge structure with the prosthetic teeth can be removed and replaced, while the adhesion between gums and the base structure is maintained.

The invention is of course not limited to the embodiments of the dental prosthetic system described above and shown in the accompanying figures. Several variants or alternatives may be considered within the framework of the invention.

Thus, it goes without saying that the invention is not limited to a prosthesis to replace a complete dental arch, but that it can also relate to a prosthetic system in which only one or two teeth or prosthetic teeth are provided. The invention can of course be used for both the upper and lower jaws.

Furthermore, the bridge structure 2 may consist of different materials that are used for manufacturing a dental prosthesis. Thus, the bridge structure 2 may consist, for example, of synthetic resin, composite material, zirconium, polycarbonate, ceramics, etc., or a combination of these materials.

Although the base structure 1 and/or the bridge structure 2 are manufactured in an interesting way by milling, it goes without saying that other production techniques can also be used. For example, they can be manufactured by applying an additive manufacturing technique such as selective laser melting or sintering, or by stereo lithography.

It is also possible for the bridge structure 2 to be attached to the base structure 1 with a so-called cement or another bonding agent. In that case, the use of bridge screws 12 is not required and it is sufficient to provide the aforementioned bores 8 in the bridge structure 2, which can work in conjunction with a release screw 17.

In certain cases it is not required either to provide a bore 8 for a bridge screw 12 opposite each bore 3 in the base structure 1, but it may be sufficient to provide a smaller number of bores 8 in the bridge structure than the number of bores 3 with base screws 11 provided in the base structure 1.

The screws 12 are slightly recessed in the surface of the bridge structure 2 in an interesting way, so that the recessed side of the screws 12 can be filled in such a way that the presence of the bridge screws is no longer visible in the surface of the bridge structure 2.

When one of the implants 10 on which the base structure 1 is mounted has to be removed because, for example, the bone or gum around this implant is inflamed, it is not required to produce a new bridge structure 2. Thus, the bridge structure 2 is removed from the base structure and a new base structure 1 is manufactured which takes into account the changed situation of the implants. After this new base structure has been fixed in the oral cavity, the existing bridge structure 2 can then be mounted on the latter.

## Claims

1. Dental prosthetic system to be mounted on one or more implants (10) fixed in the bone (13) of a jaw, having
- a base structure (1) that can be mounted on a free end of said implants (10), wherein one or more bores (3) are provided in the base structure (1) that allow the base structure (1) to be attached to the implants (10) with screws (11),
- a bridge structure (2) with one or more prosthetic teeth (6) which can be fixed on said base structure (1) in a fitting and detachable manner, wherein this bridge structure (2) has bores (8) for guiding screws (12) to fix the bridge structure (2) to the base structure (1),
**characterised in that** said bores (3) of the base structure (1) cooperate with a corresponding bore (8) of the bridge structure (2), wherein the bores (3) of the base structure (1) are coaxial with corresponding bores (8) of the bridge structure (2) when the bridge structure (2) is placed in a fitting manner on the base structure (1), wherein this system further includes base screws (11) for attaching said base structure (1), via said bores (3) of the base structure (1), to said implants (10) or to an abutment provided on these implants (10), wherein the heads (15) of these base screws (11) are provided with an internally threaded screw hole for mounting the bridge structure (2) on the base structure (1) via said bores (8) of the bridge structure (2) by means of bridge screws (12) provided to that end which can be fixed in said screw hole of the base screws (11).

2. Dental prosthetic system according to claim 1, wherein said base structure (1) has at least two bores (3) that allow to attach the base structure (1) to at least two implants (10), wherein for each said bore (3) in the base structure (1) a corresponding bore (8) is provided in the bridge structure (2), wherein the bores (8) in the bridge structure (2) are coaxial to the bores (3) in the base structure (1) when the bridge structure (2) is placed in a fitting manner on the base structure (1).

3. Dental prosthetic system according to claim 1 or 2, wherein said bores (8) of the bridge structure (2) have an internal thread (16) that can cooperate with a release screw (17), such that when the release screw (17) is screwed in the bores (8) of the bridge structure (2), this bridge structure (2) is detached from the base structure (1) as a result of a compressive force exerted by the release screw (17) on a corresponding base screw (11) or on said base structure (1).

4. Dental prosthetic system according to claim 3, wherein an end of said release screw (17), opposite its head, extends opposite the head (15) of said base screw (1) when the release screw (17) is screwed in said bore (8) of the bridge structure (2) while this bridge structure (2) is placed on the base structure (1).

5. Dental prosthetic system according to claim 3 or 4, wherein said bore (8) of the bridge structure is provided with a sleeve (18) extending over the length of the bore (8), wherein this sleeve (18) is provided with said internal thread (16) for said release screw (17).

6. Dental prosthetic system according to claim 5, wherein one end of said sleeve (18) has a collar (19), while its opposite end has an external thread (20) and cooperates with a nut (21), such that the bridge structure (2) is clamped between said collar (19) and said nut (21).

7. Dental prosthetic system according to claim 5 or 6, wherein said bridge structure (2) is mainly made of plastic, while said sleeve (18) is made of metal.

8. Dental prosthetic system according to any one of claims 3 to 7, wherein said bores (8) of the bridge structure (2) have a diameter which is larger than the diameter of the shaft of said bridge screws (12), wherein said release screw (17) can be screwed in these bores (8).

9. Dental prosthetic system according to claim 8, wherein the diameter of the shaft of said bridge screws (12) is smaller than the diameter of said release screw (17).

10. Dental prosthetic system according to any one of claims 3 to 8, wherein the end of said release screw (17) opposite its head has a diameter which is smaller than the diameter of the shaft of said bridge screws (12) at the level of its corresponding end, such that this end of the release screw (17), in the screw hole in the head (15) of said base screws (11), can exert a pressure on the latter in order to remove the bridge structure (2) from the base structure (1) when the release screws (17) are screwed in the bores (8) in the bridge structure (2).
